(19) Europäisches Patentamt
European Patent Office
Office européen des brevets

(11) Veröffentlichungsnummer: **0 037 377**
**B1**

# (12) EUROPÄISCHE PATENTSCHRIFT

(45) Veröffentlichungstag der Patentschrift: **01.08.84**

(51) Int. Cl.³: **C 09 B 45/26** // D06P1/10, D06P3/24

(21) Anmeldenummer: **81810111.5**

(22) Anmeldetag: **23.03.81**

(54) **Metallkomplexfarbstoffe, deren Herstellung und Verwendung.**

(30) Priorität: **27.03.80 CH 2421/80**

(43) Veröffentlichungstag der Anmeldung:
**07.10.81 Patentblatt 81/40**

(45) Bekanntmachung des Hinweises auf die Patenterteilung:
**01.08.84 Patentblatt 84/31**

(84) Benannte Vertragsstaaten:
**CH DE FR GB IT LI**

(56) Entgegenhaltungen:
**CH - A - 616 687**
**FR - A - 1 451 845**
**GB - A - 2 002 410**

(73) Patentinhaber: **CIBA-GEIGY AG, Postfach, CH-4002 Basel (CH)**

(72) Erfinder: **Beffa, Fabio, Dr., Burgstrasse 38, CH-4125 Riehen (CH)**

**EP 0 037 377 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Metallkomplexfarbstoffe sowie deren Herstellung und Verwendung insbesondere zum Färben von Leder in dunkelbraunen bis schwarzen Farbtönen.

Zum Färben von Leder in schwarzen Farbtönen verwendet man vielfach noch Benzidinfarbstoffe, welche jedoch in toxikologischer Hinsicht nicht unbedenklich sind. Der vorliegenden Erfindung lag daher die Aufgabe zugrunde, vor allem schwarze Lederfarbstoffe zur Verfügung zu stellen, die keine Benzidinabkömmlinge sind und die ein gutes Deck- und Aufziehvermögen besitzen und gute Echtheiten, insbesondere Licht- und Nassechtheiten aufweisen.

Diese Aufgabe wird durch die erfindungsgemässen Farbstoffe gelöst.

Gegenstand der Erfindung sind neue von faserreaktiven Gruppen freie Metallkomplexfarbstoffe der Formel (1)

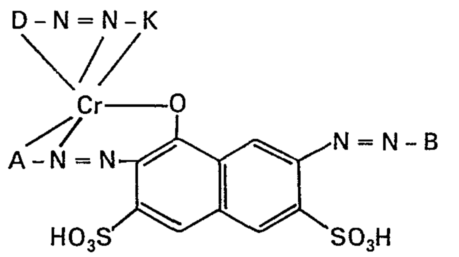

(I)

worin A der Rest eines 1-Hydroxy-2-aminobenzols ist, welcher ein- oder zweimal durch Chlor, Nitro oder Sulfo substituiert ist, B ein 1- oder 2-Naphthol, m-Phenylendiamin, Resorcin, p-Alkyl ($C_1$–$C_6$)-Phenol, 1-Phenyl-3-methyl-5-pyrazolon oder Acetessigsäureanilid, wobei die Phenylgruppe in den beiden letztgenannten Verbindungen durch $C_1$–$C_4$-Alkyl, $C_1$–$C_4$-Alkoxy, Chlor oder Sulfo substituiert sein kann, K gegebenenfalls durch Sulfo und/oder Amino substituiertes 1-Naphthol oder 2-Naphthol, in p-Stellung durch $C_1$–$C_6$-Alkyl substituiertes Phenol, gegebenenfalls durch Sulfo substituiertes 2-Naphthylamin, 1-Phenyl-3-methyl-5-pyrazolon oder Acetessigsäureanilid, wobei die Phenylgruppe in den beiden letztgenannten Verbindungen durch $C_1$–$C_4$-Alkyl, $C_1$–$C_4$-Alkoxy, Chlor oder Sulfo substituiert sein kann und D der Rest eines 1-Hydroxy-2-aminobenzols oder 1-Amino-2-Hydroxynaphthalins, welches noch durch Nitro und/oder Sulfo substituiert ist, bedeutet.

Die Farbstoffe der Formel (1) enthalten keine faserreaktive Gruppe, d.h. keine Gruppe, welche unter den üblichen Färbebedingungen mit Cellulose- oder Polyamidmaterial unter Bildung einer chemischen Bindung zu reagieren vermag.

Der Rest A leitet sich beispielsweise von folgenden Aminen ab: 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-6-nitro-2-amino-1-hydroxybenzol, 6-Chlor-4-nitro-2-amino-1-hydroxybenzol, 4-Methyl-2-amino-1-hydroxybenzol, 4-Chlor-5-nitro-2-amino-1-hydroxy-benzol, 3,4,6-Trichlor-2-amino-1-hydroxybenzol, 4,6-Dinitro-2-amino-1-hydroxybenzol, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 4-Chlor-2-amino-1-hydroxybenzol-6-sulfosäure, 2-Amino-1-hydroxybenzol-4,6-disulfosäure.

Statt der oben genannten Amine mit Hydroxygruppe kommen auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-Sulfosäure, oder tosyliertes 1-Hydroxy-2-aminobenzol, wobei die Methoxy- oder O-Tosylgruppe bei der Metallisierung in eine OH-Gruppe umgewandelt wird. Verbindungen mit diesen Gruppen werden vor allem dann eingesetzt, wenn die entsprechenden 1-Hydroxy-2-aminoverbindungen schlecht kuppeln.

Vorzugsweise ist A der Rest eines 1-Hydroxy-2-amino-4-nitrobenzols, welcher gegebenenfalls noch eine Sulfogruppe trägt.

Die Kupplungskomponente B stellt ein 1- oder 2-Naphthol, m-Phenyl-diamin, Resorcin, p-Alkyl($C_1$–$C_6$)-Phenol, 1-Phenyl-3-methyl-5-pyrazolon oder Acetessigsäureanilid dar, wobei die Phenylgruppe in den beiden letztgenannten Verbindungen durch $C_1$–$C_4$-Alkyl, $C_1$–$C_4$-Alkoxy, Chlor oder Sulfo substituiert sein kann.

Beispiele für geeignete Kupplungskomponenten B sind: 2-Naphthol, 1-Naphthol, 1-Phenyl-3-methylpyrazol-5-on, 1-(2'-,3'- oder 4'-Methylphenyl)-3-methylpyrazol-5-on, 1-(2',3'- oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2',5'- oder 3',4'-Dichlor-phenyl)-3-methylpyrazol-5-on, 1-(2',5'-Dichlor-4'-sulfophenyl)-3-methylpyrazol-5-on, Acetoacetanilid, Acetoacetanilid-4-sulfonsäure, Acetoacet-o-anisidid, Acetoacet-o-toluidid, Acetoacet-o-chloranilid, Acetoacet-m-xylidid, 4-Methylphenol, 4-Butylphenol, 4-Amylphenol, insbesondere 4-t-Amylphenyl, Resorcin.

Als Farbstoffe der Formel D – N = N – K (2) kommen vor allem die bekannten metallisierbaren Farbstoffe in Frage, beispielsweise die im «Color Index» als mordant dyes aufgeführten, worin D der Rest eines 1-Hydroxy-2-aminobenzols oder 1-Amino-2-hydroxynaphthalins ist, welches noch durch Nitro und/oder Sulfo substituiert ist.

K stellt den Rest einer der folgenden Kupplungskomponenten dar: gegebenenfalls durch Sulfo und/oder Amino substituiertes 1-Naphthol oder 2-Naphthol, in p-Stellung durch $C_1$–$C_6$-Alkyl substituiertes Phenol, gegebenenfalls durch Sulfo substituierte 1- oder 2-Naphthylamine, 1-Phenyl-3-methyl-5-pyrazolon oder Acetessigsäureanilid, wobei die Phenylgruppe in den beiden letztgenannten Verbindungen durch $C_1$-C-Alkyl, $C_1$–$C_4$-Alkoxy, Chlor oder Sulfo substituiert sein kann.

Die metallisierbaren Verbindungen der Formel (4)

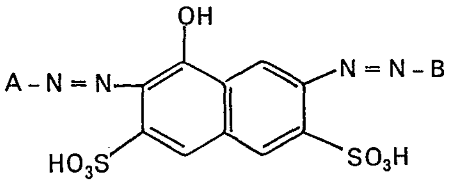

(4)

werden nach an sich bekannten Methoden erhalten, indem man z.B. ein Amin der Formel

$A - NH_2$ (5)

diazotiert und mit der Kupplungskomponente der Formel

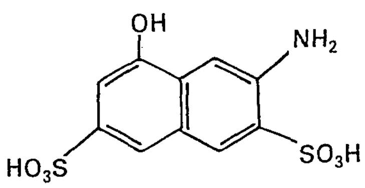

(6)

bei alkalischem pH-Wert kuppelt. Anschliessend wird dann die Aminogruppe am Naphthalin diazotiert und mit einer Kupplungskomponente B gekuppelt. A und B weisen dabei die oben angegebene Bedeutung auf.

Die Darstellung der erfindungsgemässen 1:2-Chromkomplexe der oben angegebenen Formel I, welche einen Farbstoff der Formel (2) und einen Farbstoff der Formel (4) enthalten, erfolgt z.B. indem man zunächst den einen dieser Farbstoffe, vorzugsweise den Farbstoff (2), mit einem chromabgebenden Mittel zum 1:1 Komplex umsetzt. Anschliessend wird dieser dann durch Reaktion mit dem anderen Farbstoff in einen 1:2-Komplex umgewandelt. Diese Umwandlung erfolgt zweckmässig in neutralem bis schwach alkalischem Medium, in offenem oder geschlossenem Gefäss, bei erhöhter Temperatur, z.B. bei Temperaturen zwischen 50 und 120°C. Man kann in organischen Lösungsmitteln, z.B. Alkoholen oder Ketonen arbeiten oder in wässriger Lösung, wobei Zusätze von Lösungsmitteln, wie z.B. von Alkoholen, Formamid etc., gegebenenfalls die Umsetzung fördern können. Es empfiehlt sich im allgemeinen möglichst stöchiometrische Mengen des 1:1-Komplexes und des metallfreien Farbstoffes miteinander umzusetzen. Ein Überschuss an metallhaltigem Farbstoff wirkt sich in der Regel weniger nachteilig aus als ein solcher an metallfreiem Farbstoff.

Es ist auch möglich, ein Gemisch der Farbstoffe der Formeln (2) und (4) mit einem chromabgebenden Mittel umzusetzen.

Ein weiteres Verfahren zur Herstellung der erfindungsgemässen 1:2 Chromkomplexe der oben angegebenen Formel I besteht darin, dass man zunächst einen 1:2 Chromkomplex der Formel 7

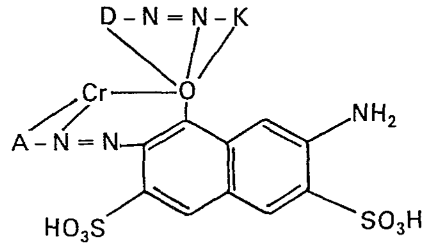

(7)

herstellt, diesen auf übliche Weise diazotiert, z.B. mit Salzsäure und Natriumnitritlösung, und anschliessend mit einer Kupplungskomponente H-B kuppelt. D, K, A und B weisen dabei die bei der Formel (1) genannte Bedeutung auf.

Die nach den obigen Verfahren erhältlichen, neuen Chromkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedenen natürlichen oder synthetischen Polyamidmaterialien, wie Wolle, Seide, synthetische Polyamidfasern, Polyurethane, insbesondere aber zum Färben von Leder.

Die neuen Farbstoffe sind farbstark und dekken gut. Sie haben ein gutes Ziehvermögen bei gleichzeitig guten Echtheiten wie Wasch-, Wasser-, Schweiss-, Reib-, Diffusions-, Licht-, Säure- und Alkalistabilität. Ausserdem sind sie weitgehend unempfindlich gegenüber Ca-Salzen im Färbebad, was meistens die Verwendung von nichtenthärtetem Wasser gestattet. Besondere Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige braune bis schwarze Nuancen.

Die in der FR-A-1.451.845 offenbarten 1:2-Chromkomplexe unterscheiden sich von den in der vorliegenden Anmeldung beanspruchten dadurch, dass die Gruppe -N=N-E, welche teilweise mit der Gruppe -N=N-B in der vorliegenden Anmeldung übereinstimmt, in 8-Stellung der Naptholdisulfonsäure angeordnet ist (statt in der 7-Stellung). Ausserdem muss in den Komplexen der FR-A-1.451.845 zwingend mindestens eine Sulfonamidgruppierung enthalten sein, während diese Gruppe in den Farbstoffen der vorliegenden Anmeldung fehlt.

Um von den nächstliegenden Farbstoffen der CH-A-616.697 zu den erfindungsgemässen Farbstoffen zu gelangen, sind ebenfalls mindestens zwei Schritte erforderlich:

1) Ersatz von Hydroxynaphthylaminomonosulfonsäure als Mittelkomponente des Disazofarbstoffes durch Hydroxynaphthylamin-3,6-disulfonsäure.

2) Ersatz der Acylaminogruppe an der Kupplungskomponente des Monoazofarbstoffes durch eine Aminogruppe.

Für solche Abwandlungen gibt es aber nicht den geringsten Hinweis in der CH-A.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

Beispiel 1:

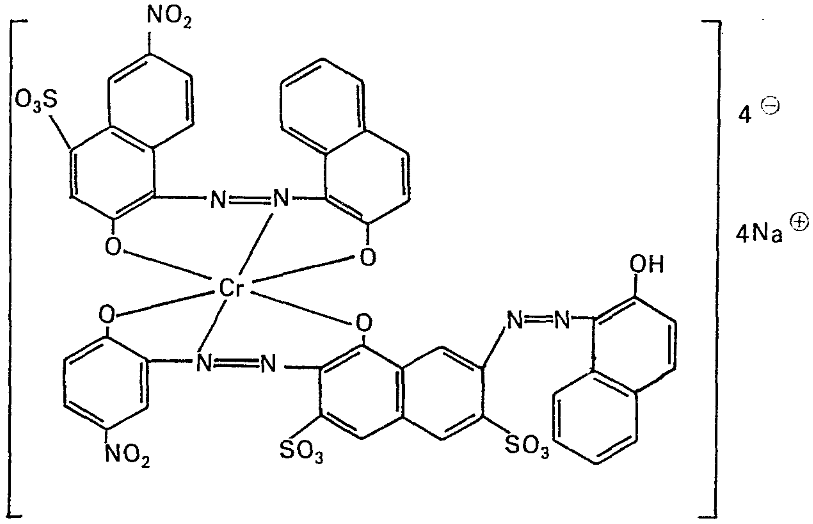

In 1000 Volumenteilen Wasser suspendiert man 48,9 Teile der komplexen Chromverbindung vom Typus 1 Atom Chrom : 1 Molekül Farbstoff, welche 5,2 Teilen Chrom und 43,9 Teilen Monoazofarbstoff aus diazotierter 6-Nitro-1-amino-2-hydroxynaphthalin-4-sulfonsäure und 2-Hydroxynaphthalin entspricht, mit 63,9 Teilen des Disazofarbstoffs, welcher erhalten wird durch alkalische Kupplung von diazotiertem 4-Nitro-2-amino-1-hydroxybenzol auf 1-Hydroxy-7-amino-naphthalin-3,6-disulfonsäure, Rediazotierung und Kupplung auf 2-Hydroxynaphthalin. Man erhitzt das Gemisch auf 80–85° und erhöht gleichzeitig den pH-Wert der Suspension auf 7,5 bis 8 durch Zugabe von 5n Natronlauge und hält es solange bei dieser Temperatur und konstantem pH-Wert durch weitere Zugabe von 5n Natronlauge, bis die Ausgangsprodukte verschwunden sind. Der neue, chromhaltige Farbstoff wird durch Sprühtrocknung isoliert. Er stellt ein dunkles Pulver dar, das sich in Wasser löst und Leder in schwarzen Tönen von guten Echtheiten färbt.

Beispiel 2:

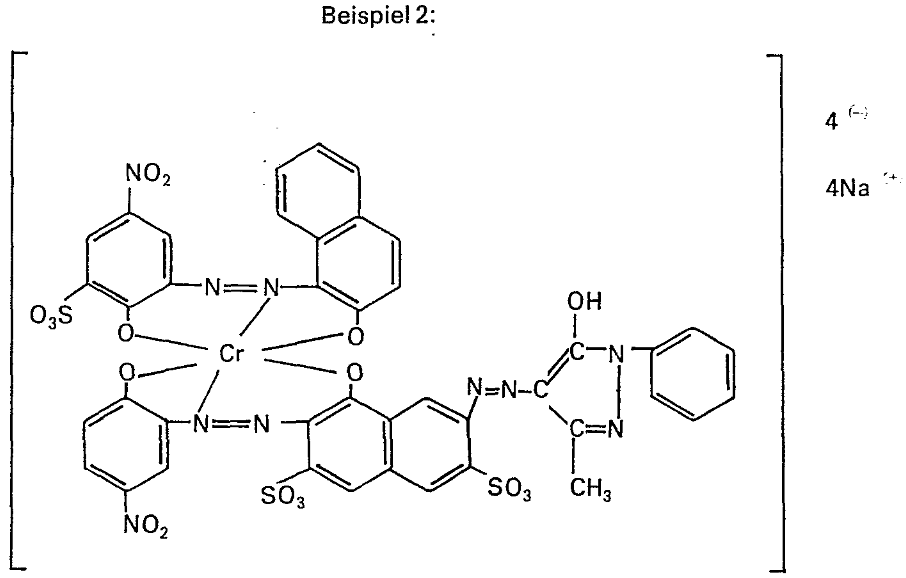

In 1000 Volumenteilen Wasser suspendiert man 43,9 Teile der komplexen Chromverbindung vom Typus 1 Atom Chrom : 1 Molekül Farbstoff, welche 5,2 Teilen Chrom und 38,9 Teilen Monoazofarbstoff aus diazotierter 4-Nitro-2-amino-1-hydroxybenzol-6-sulfonsäure und 2-Hydroxynaphthalin entspricht, mit 66,9 Teilen des Disazofarbstoffs, welcher erhalten wird durch alkalische Kupplung von diazotiertem 4-Nitro-2-amino-1-hydroxybenzol auf 1-Hydroxy-7-amino-naphthalin-3,6-disulfonsäure, Rediazotierung und Kupplung auf 1-Phenyl-3-methyl-5-pyrazolon. Man erhitzt das Gemisch auf 80–85° und hält es solange bei dieser Temperatur und pH-Wert von 7 durch Zugabe von 5n Natronlauge, bis die Ausgangsprodukte verschwunden sind. Der neue, chromhaltige Farbstoff wird durch Zugabe von Natriumchlorid ausgefällt. Man filtriert ihn ab und trocknet ihn. Nach dem Trocknen stellt er ein dunkles Pulver dar, das sich in Wasser löst und Leder in schwarzen Tönen färbt.

Beispiel 3:

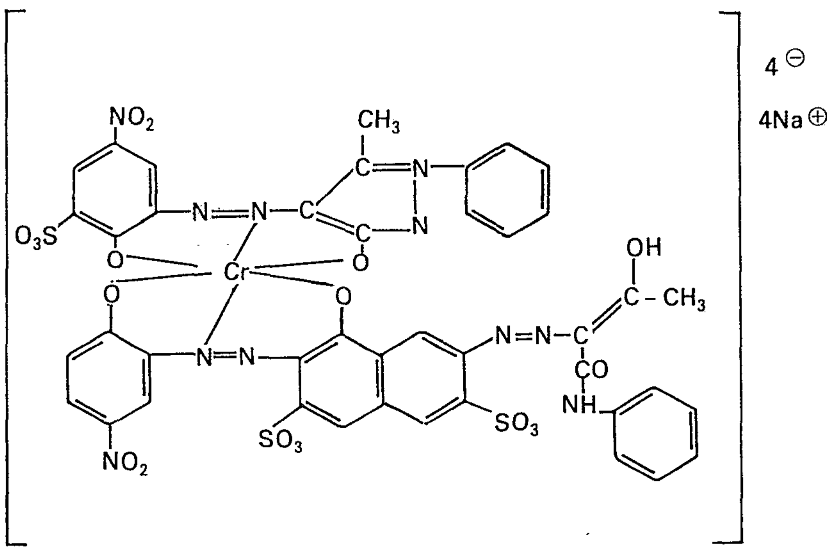

In 1000 Volumenteilen Wasser suspendiert man 46,9 Teile der komplexen Chromverbindung vom Typus 1 Atom Chrom : 1 Molekül Farbstoff, welche 5,2 Teilen Chrom und 41,9 Teilen Monoazofarbstoff aus diazotierter 4-Nitro-2-amino-1-hydroxybenzol-6-sulfonsäure und 1-Phenyl-3-methyl-5-pyrazolon entspricht, mit 67,2 Teilen des Disazofarbstoffs, welcher erhalten wird durch alkalische Kupplung von diazotiertem 4-Nitro-2-amino-1-hydroxybenzol mit 1-Hydroxy-7-amino-naphthalin-3,6-disulfonsäure, Rediazotierung und Kupplung auf Acetessigsäure-N-phenylamid. Man erhitzt das Gemisch auf 80–85° und hält es solange bei dieser Temperatur und pH-Wert von 7–7,5 durch Zugabe von 5n Natronlauge, bis die Ausgangsprodukte verschwunden sind. Der neue, chromhaltige Farbstoff wird durch Eindampfen der Suspension isoliert. Nach dem Trocknen stellt es ein dunkles Pulver dar, das Leder in echten braunen Tönen färbt.

Beispiel 4:

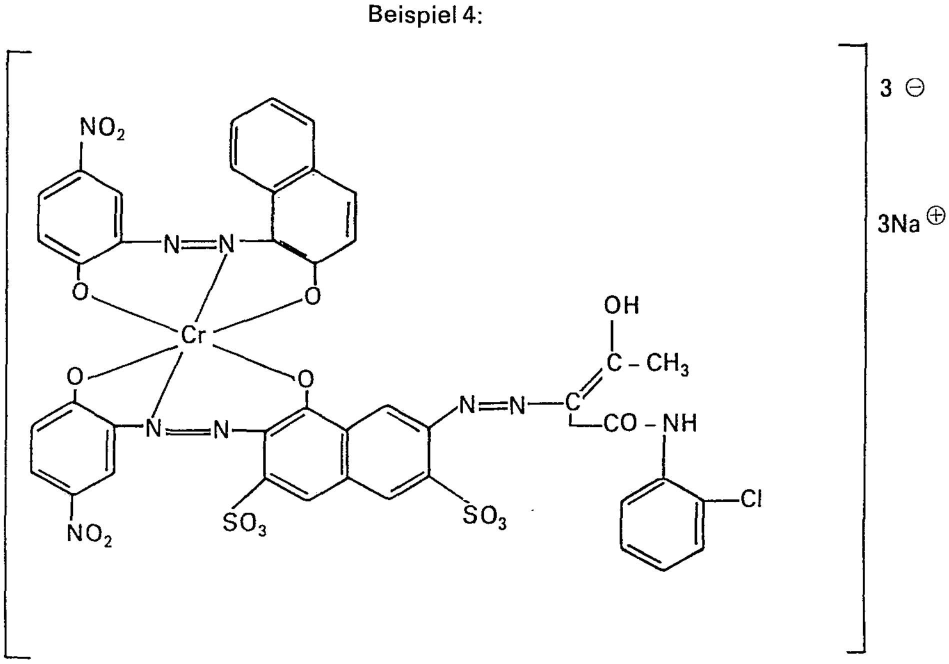

30,9 Teile des Monoazofarbstoffs aus diazotiertem 4-Nitro-2-amino-1-hydroxybenzol und 2-Hydroxynaphthalin werden mit 27,2 Teilen Chromchloridhexahydrat in 800 Volumenteilen Aethylenglykol solange bei 120–125° gerührt, bis die Ausgangsverbindung verschwunden ist. Die Lösung des erhaltenen Chromkomplexfarbstoffes vom Typus 1 Atom Chrom : 1 Molekül Farbstoff wird hierauf mit 70,6 Teilen des Disazofarbstoffs, welcher erhalten wird durch Kupplung von diazotiertem 4-Nitro-2-amino-1-hydroxybenzol auf 1-Hydroxy-7-aminonaphthalin-3,6-disulfonsäure, Rediazotierung und Kupplung auf Acetessigsäure-N-2′-chlorphenylamid versetzt. Man erhitzt das Gemisch auf 80–85° und erhöht gleichzeitig den pH-Wert der Suspension auf 7–7,5 durch Zugabe von 5n Natronlauge und hält es solange bei dieser Temperatur und konstantem pH-Wert durch weitere Zugabe von 5n Natronlauge, bis die Ausgangsprodukte verschwunden sind. Der erhaltene, neue chromhaltige Farbstoff wird durch Zugabe gesättigter Natriumchloridlösung ausgefällt, abfiltriert und getrocknet. Er stellt ein dunkles Pulver dar, das sich in Wasser löst und Leder in schwarzen Tönen von guten Echtheiten färbt.

Farbstoffe mit ähnlichen Eigenschaften erhält man, wenn man den 1:1 Chromkomplex der in Kolonne I genannten Verbindung im Verhältnis 1:1 mit dem in Kolonne II aufgeführten Disazofarbstoff umsetzt. Die Farbstoffe färben Leder in den in Kolonne III angegebenen Tönen mit guten Echtheiten.

| No. | I | II | III |
|---|---|---|---|
| 1. | 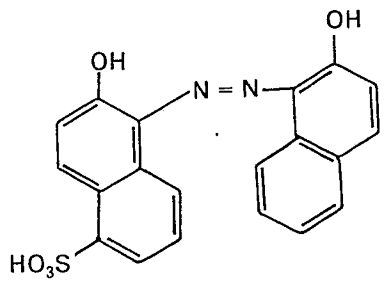 | 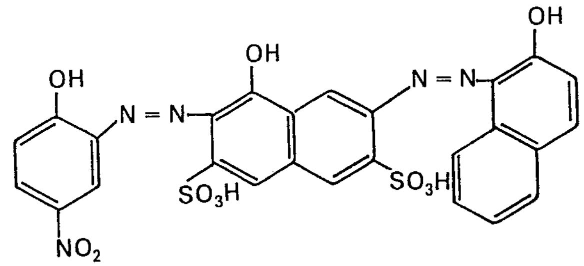 | Schwarz |
| 2. | 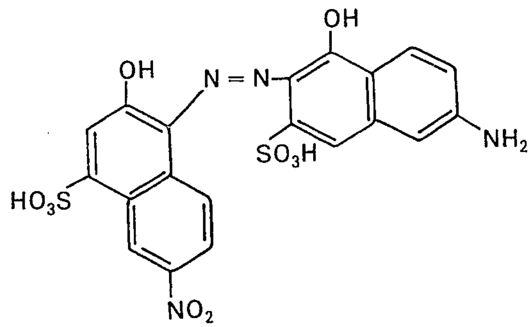 | 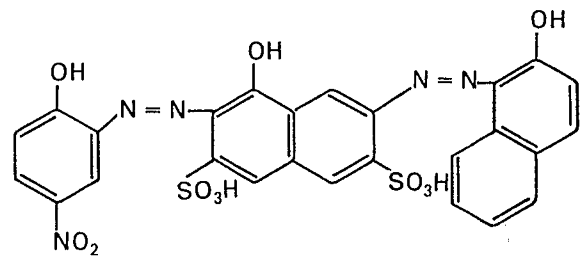 | Schwarz |
| 3. | 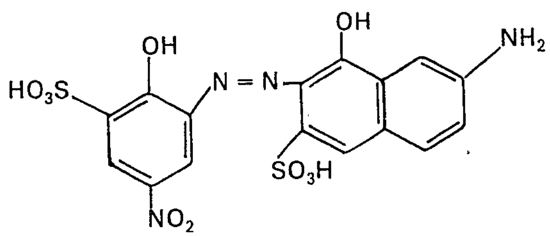 | 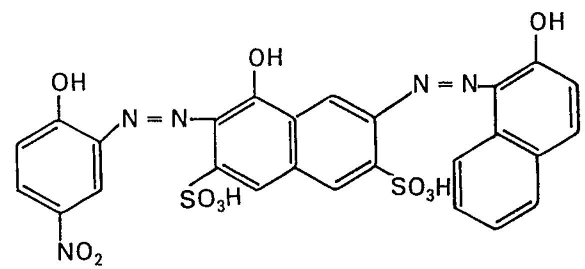 | Schwarz |

| No. | I | II | III |
|---|---|---|---|
| 4. | 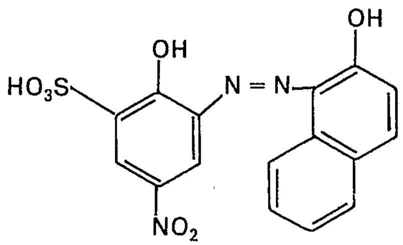 | 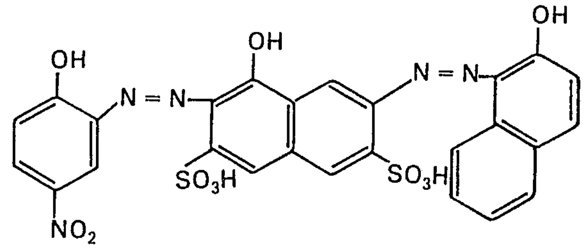 | Schwarz |
| 5. | 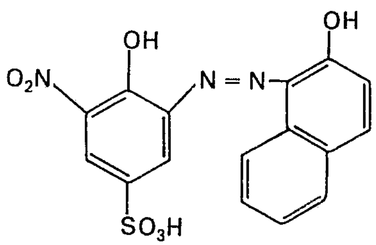 | 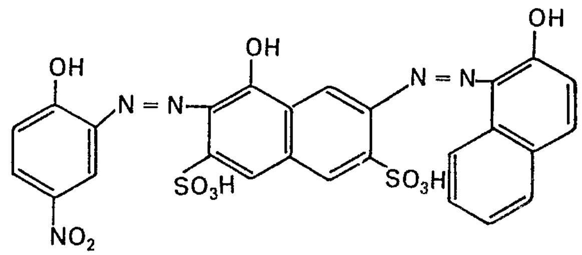 | Schwarz |
| 6. | 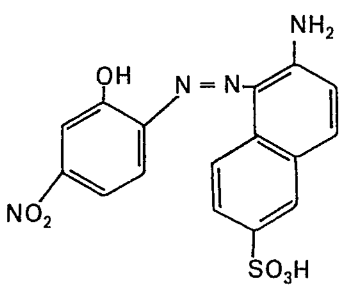 | 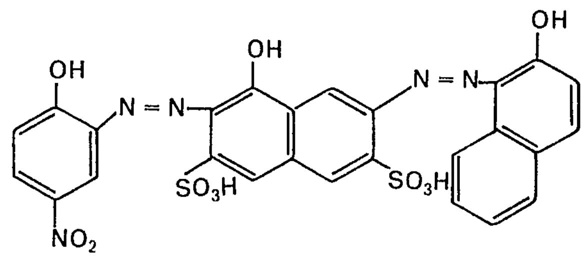 | Schwarz |

| No. | I | II | III |
|---|---|---|---|
| 7. | 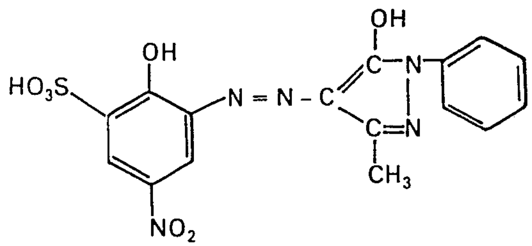 | 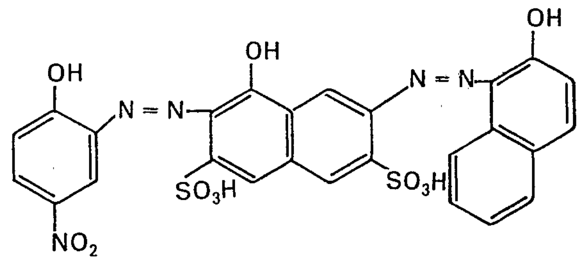 | Dunkelbraun |
| 8. | 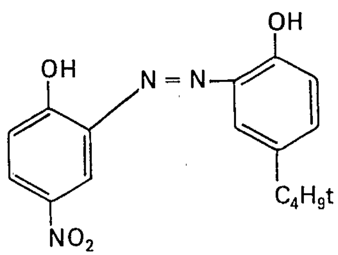 | 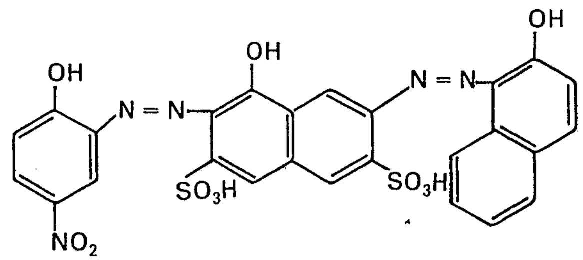 | Schwarz |
| 9. | 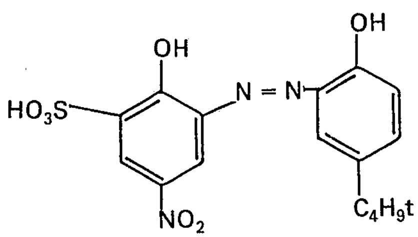 | 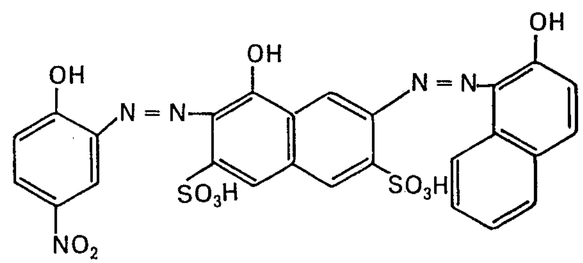 | Schwarz |
| 10. | 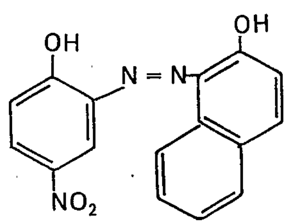 | 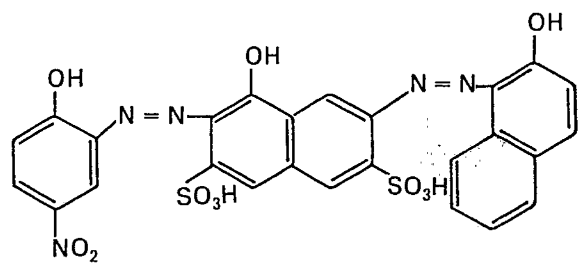 | Schwarz |

| No. | I | II | III |
|---|---|---|---|
| 11. | 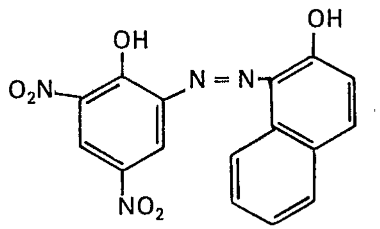 | 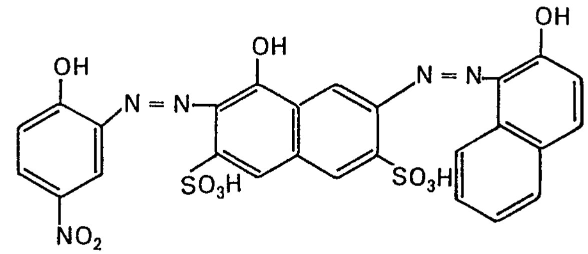 | Schwarz |
| 12. | 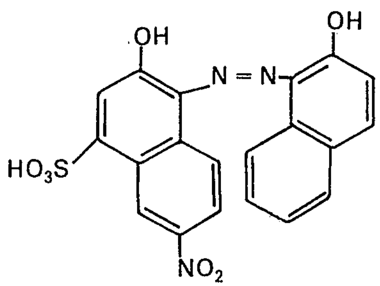 | 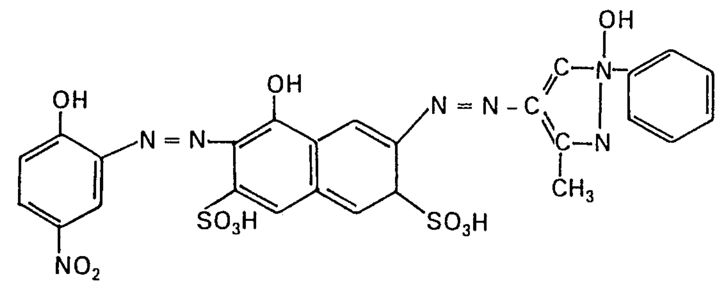 | Schwarz |
| 13. | 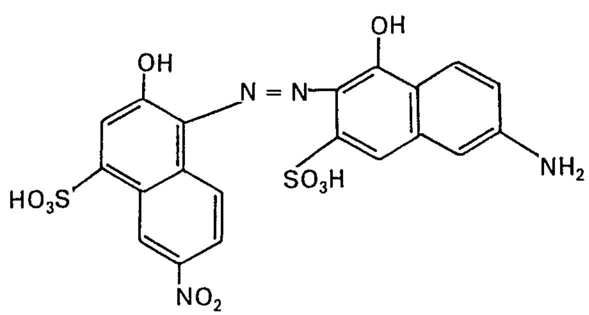 | 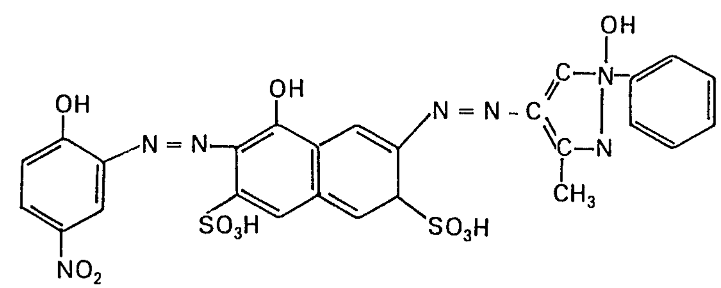 | Schwarz |
| 14. | 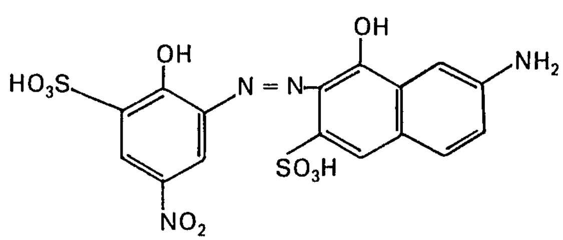 | 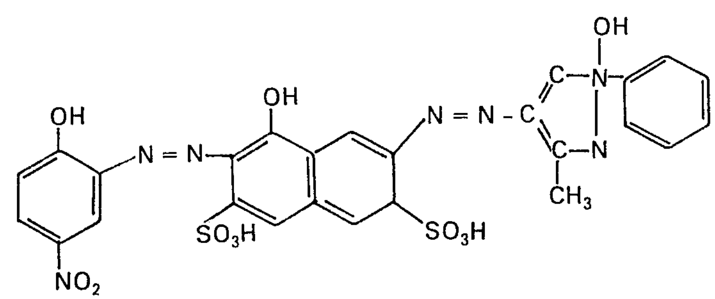 | Schwarz |

| No. | I | II | III |
|---|---|---|---|
| 15. | 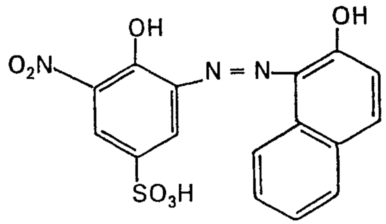 | 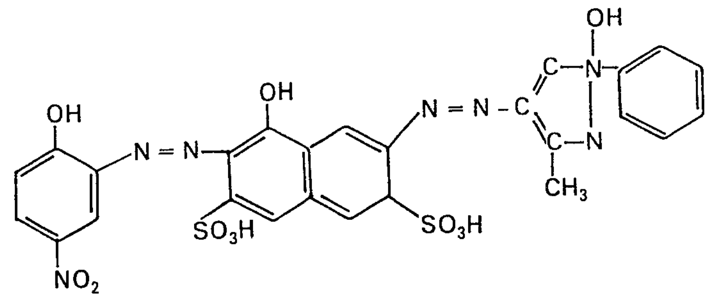 | Schwarz |
| 16. | 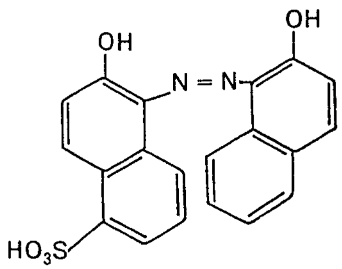 | 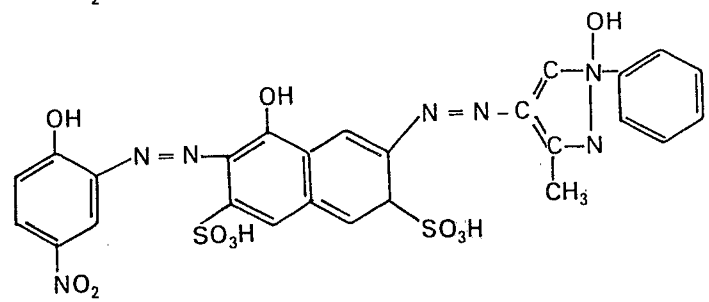 | Schwarz |
| 17. | 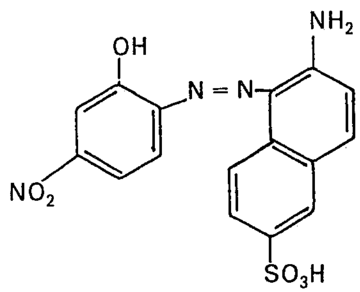 | 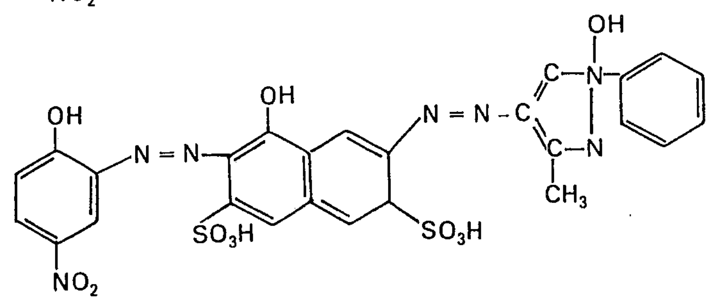 | Oliveschwarz |
| 18. | 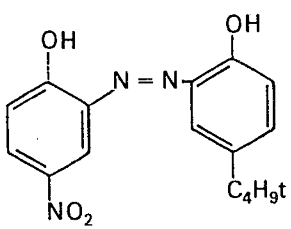 | 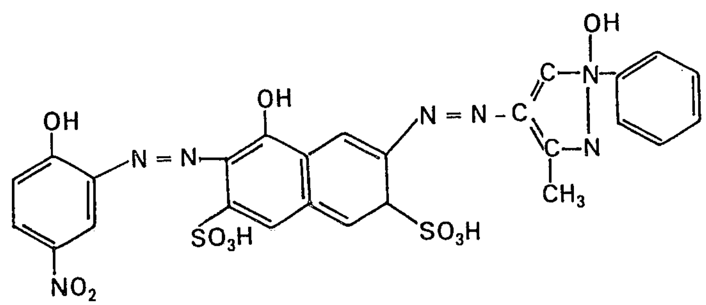 | braunstichig Schwarz |

| No. | I | II | III |
|---|---|---|---|
| 19. | 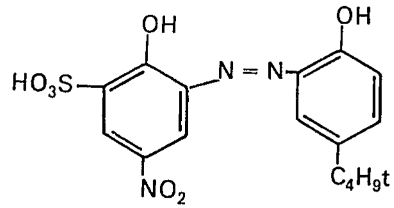 | 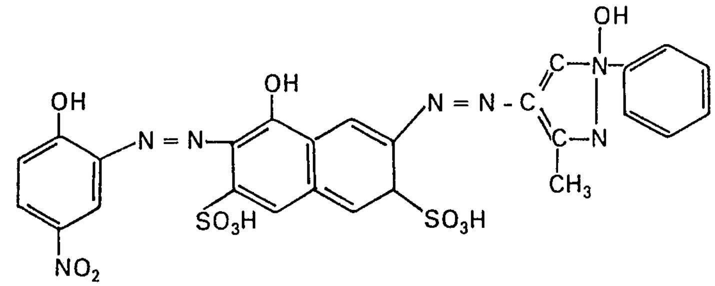 | braunstichig Schwarz |
| 20. | 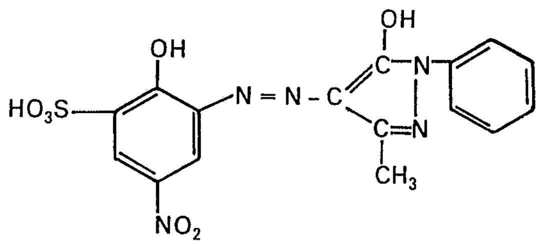 | 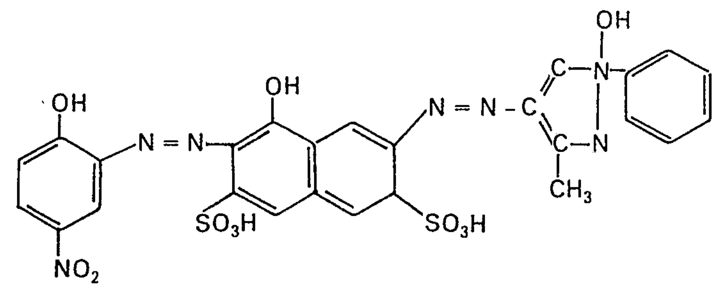 | Braun |
| 21. | 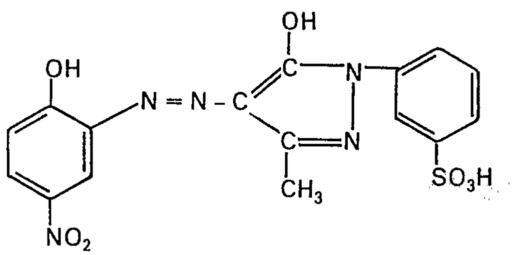 | 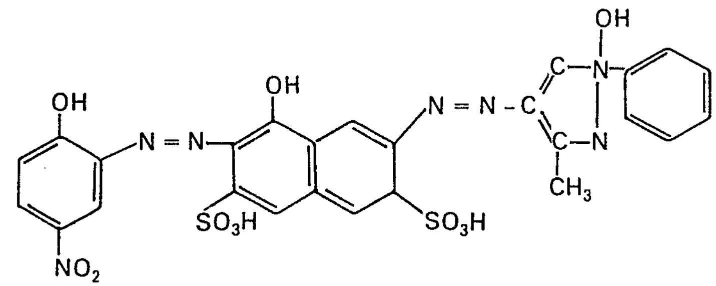 | Braun |
| 22. | 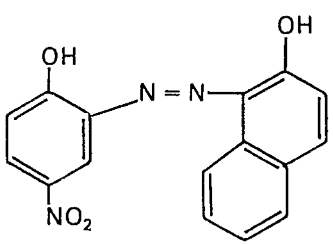 | 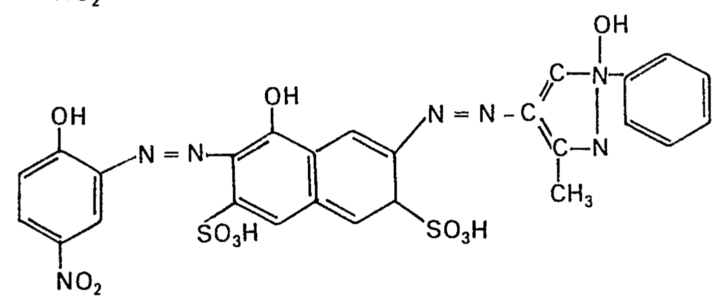 | Schwarz |

| No. | I | II | III |
|---|---|---|---|
| 23. | 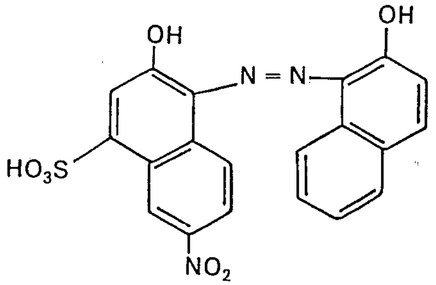 | 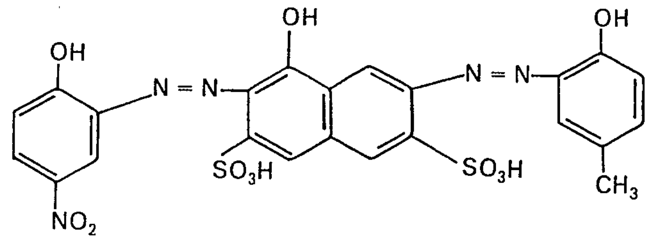 | Schwarz |
| 24. | 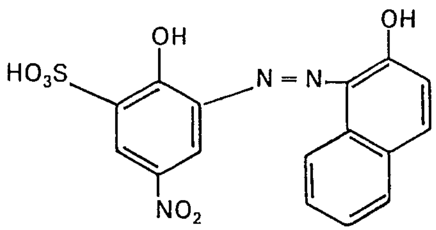 | 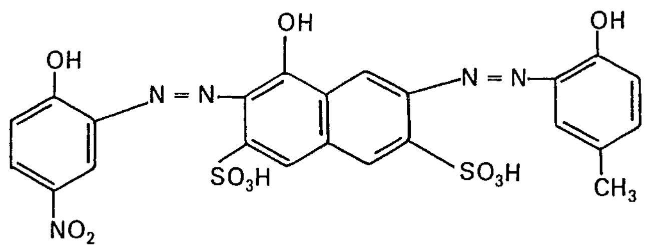 | Schwarz |
| 25. | 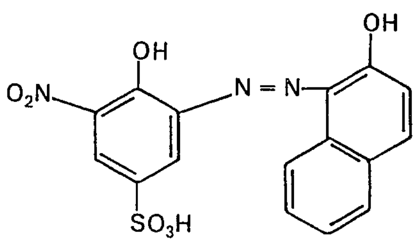 | 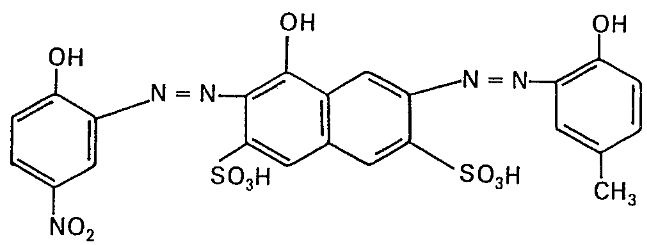 | Schwarz |
| 26. | 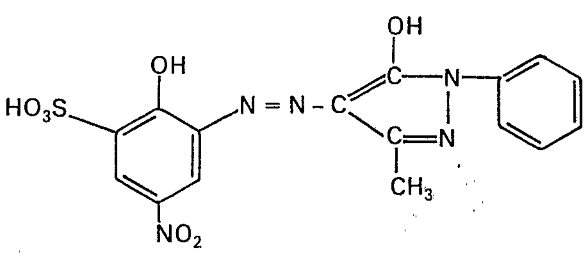 | 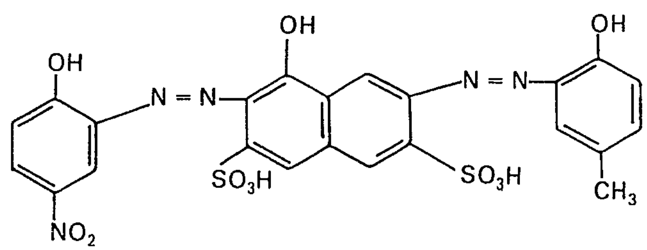 | Braun |

| No. | I | II | III |
|---|---|---|---|
| 27. | 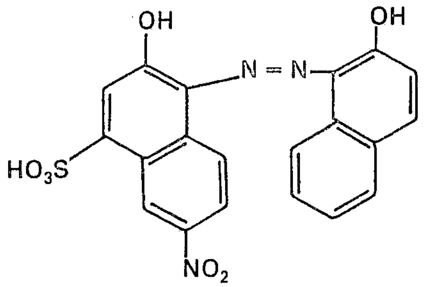 | 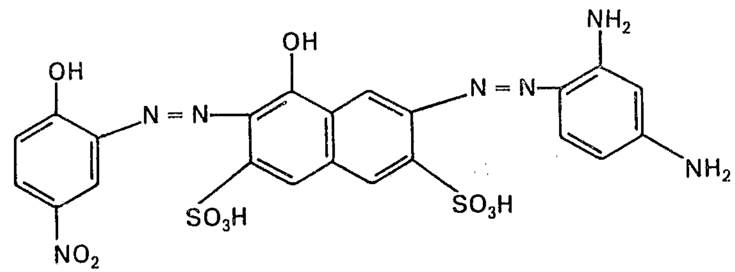 | Schwarz |
| 28. | 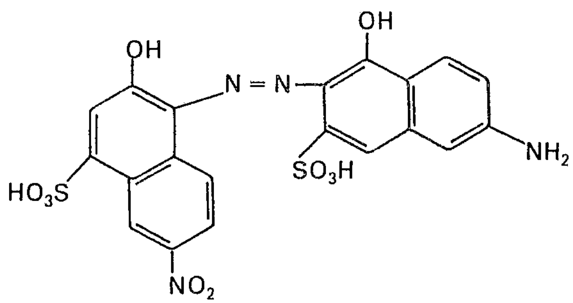 | 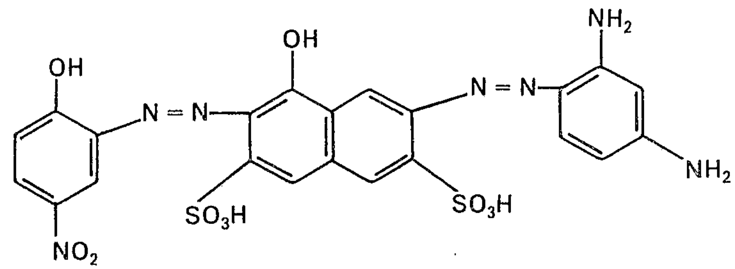 | Schwarz |
| 29. | 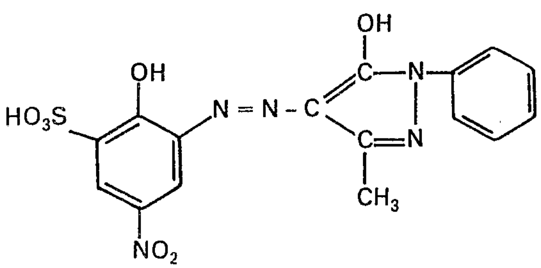 | 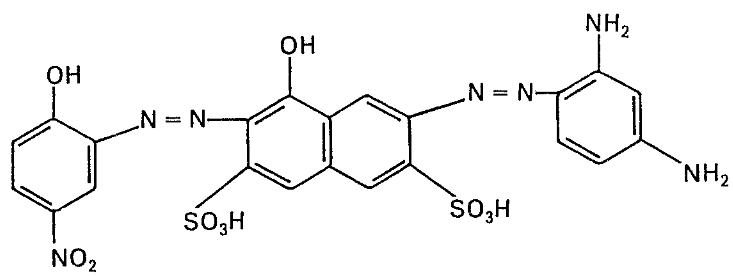 | Braun |
| 30. | 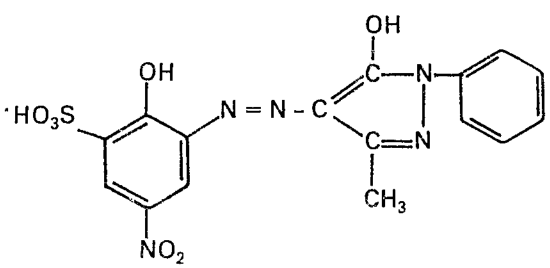 | 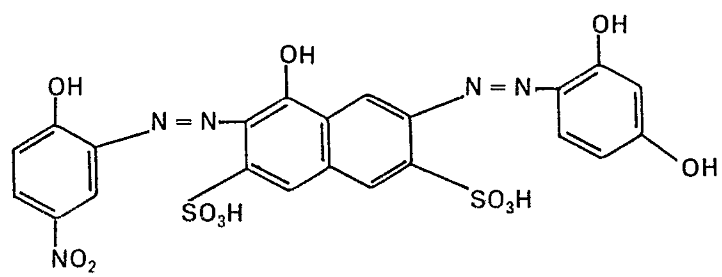 | Braun |

| No. | I | II | III |
| --- | --- | --- | --- |
| 31. | 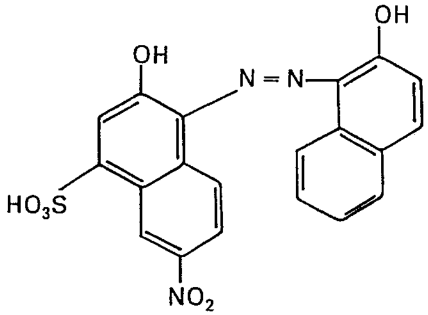 | 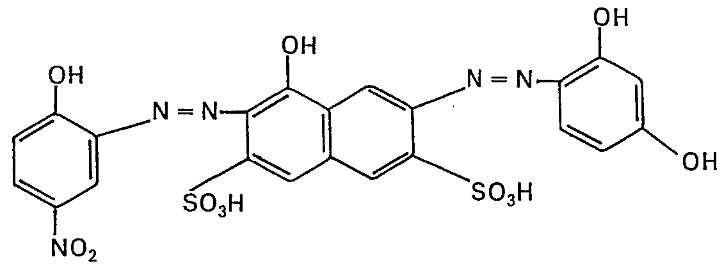 | Schwarz |
| 32. | 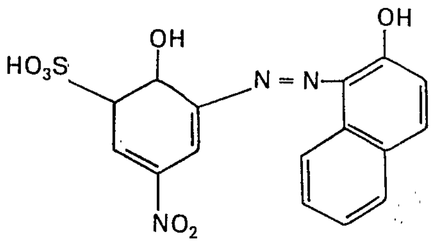 | 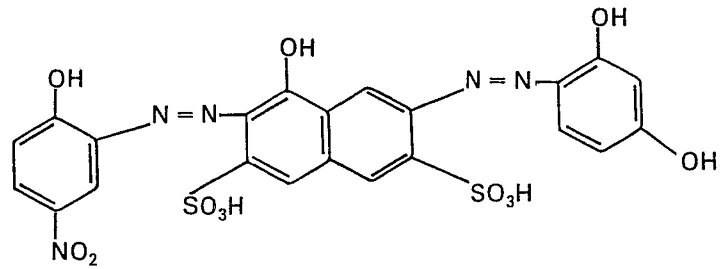 | Schwarz |
| 33. | 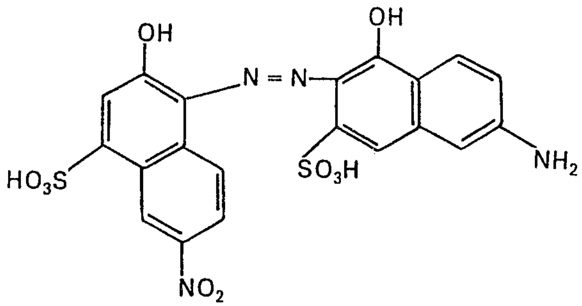 | 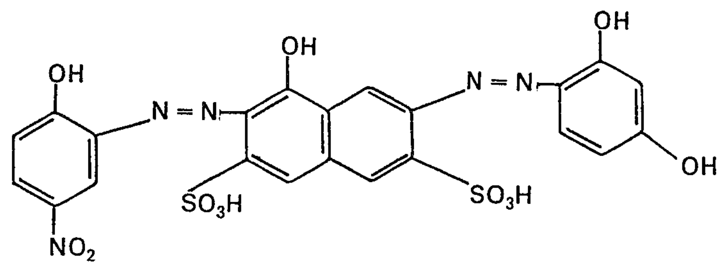 | Schwarz |
| 34. | 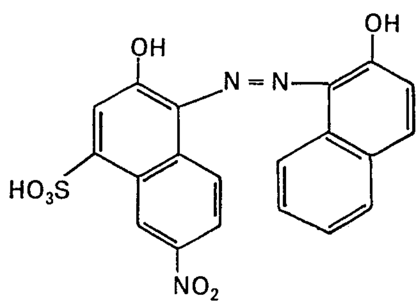 | 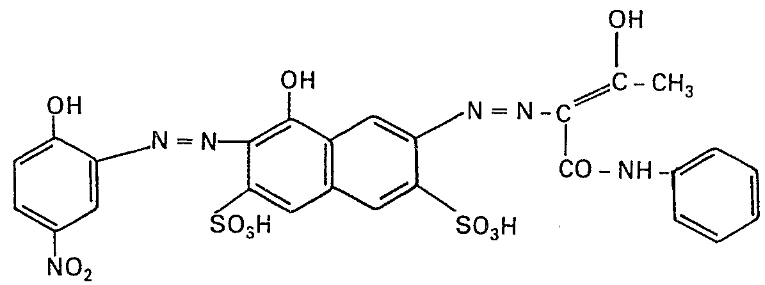 | Schwarz |

| No. | I | II | III |
|---|---|---|---|
| 35. | 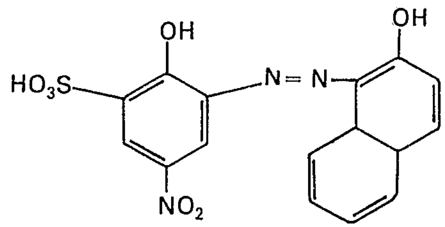 | 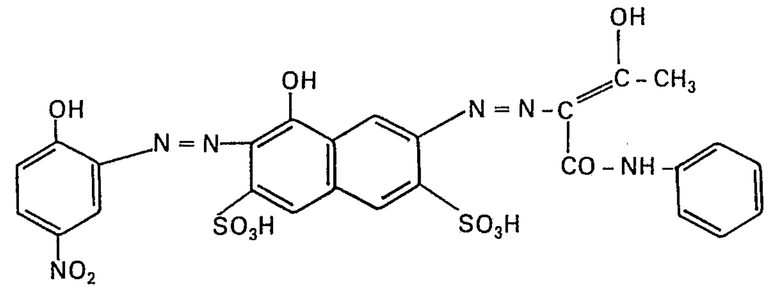 | Schwarz |
| 36. | 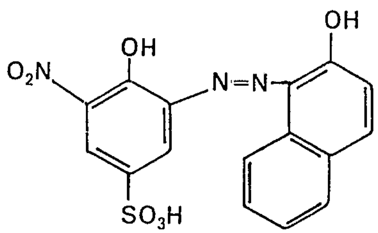 | 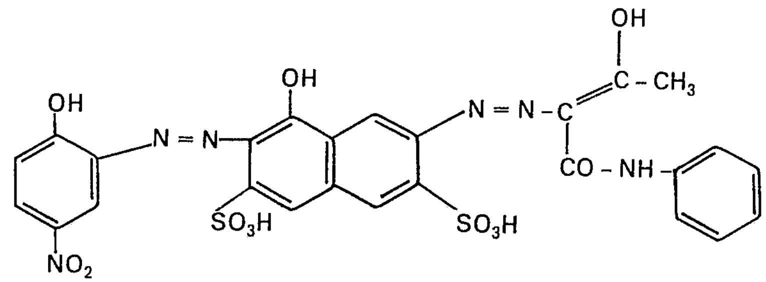 | Schwarz |
| 37. | 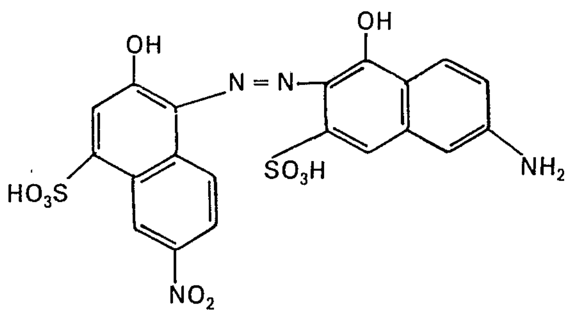 | 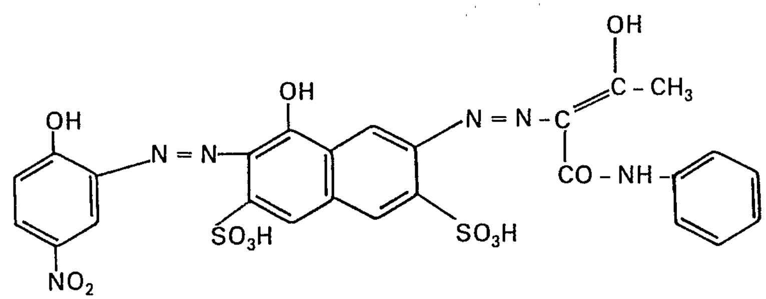 | Schwarz |

| No. | I | II | III |
|---|---|---|---|
| 38. | 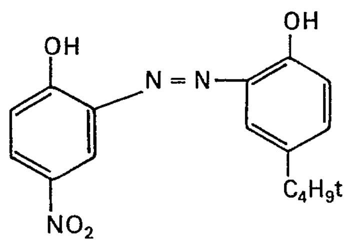 | 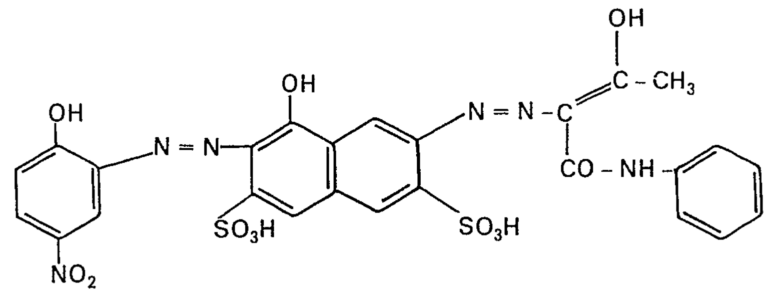 | Schwarz |
| 39. | 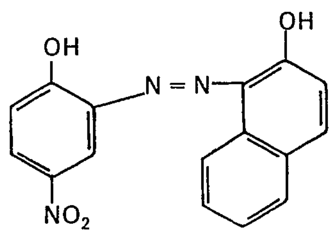 | 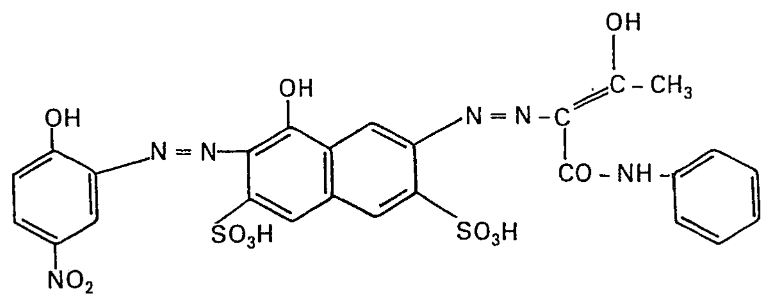 | Schwarz |
| 40. | 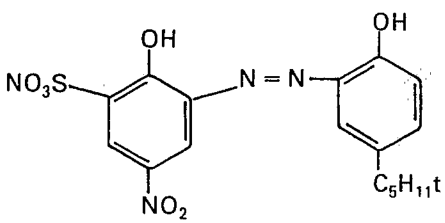 | 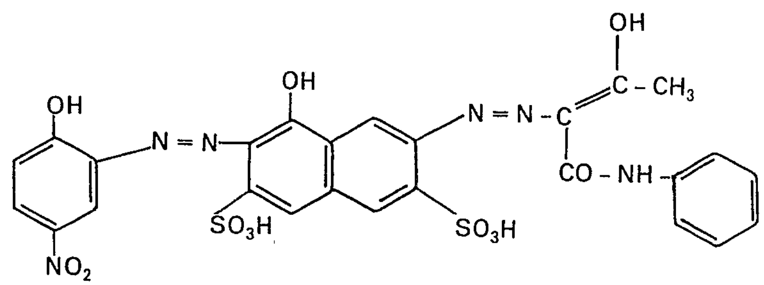 | Schwarz |

| No. | I | II | III |
|---|---|---|---|
| 41. | 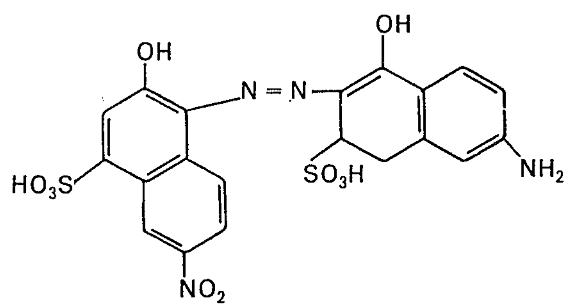 | 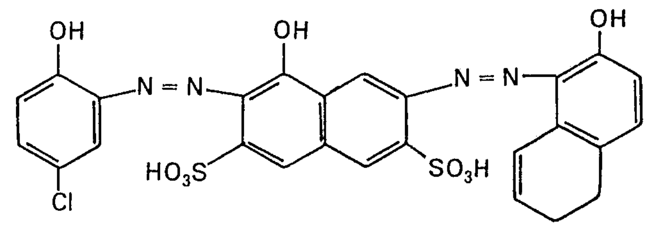 | Schwarz |
| 42. | 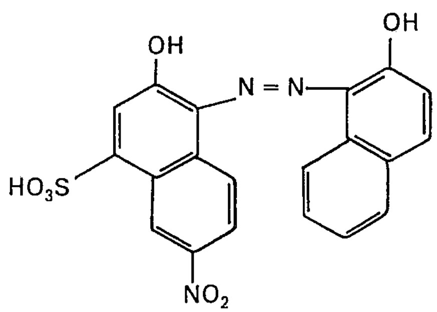 | 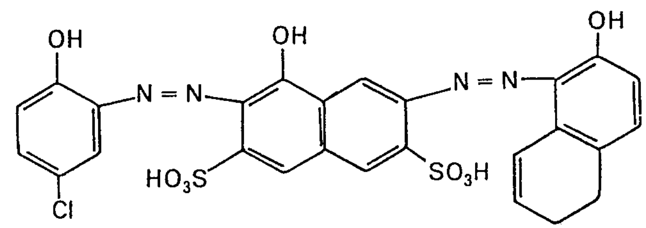 | Schwarz |
| 43. | 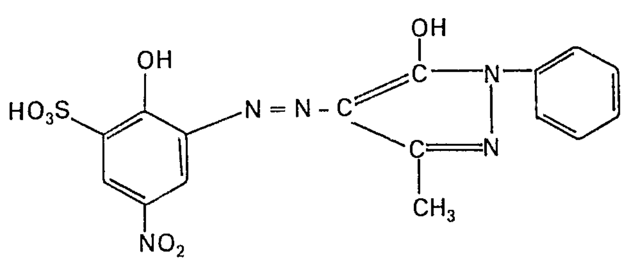 | 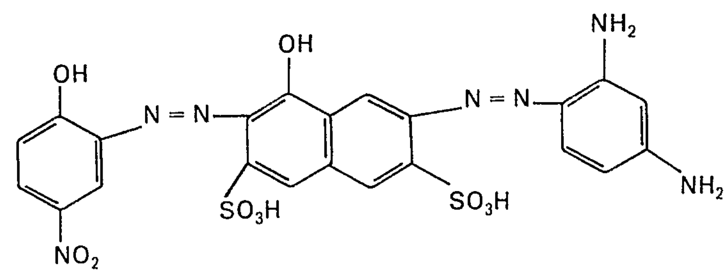 | Dunkelbraun |

| No. | I | II | III |
|---|---|---|---|
| 44. | 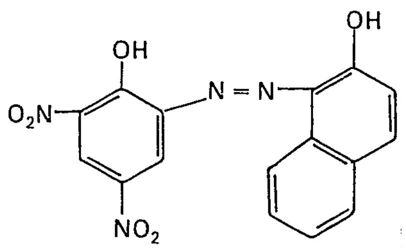 | 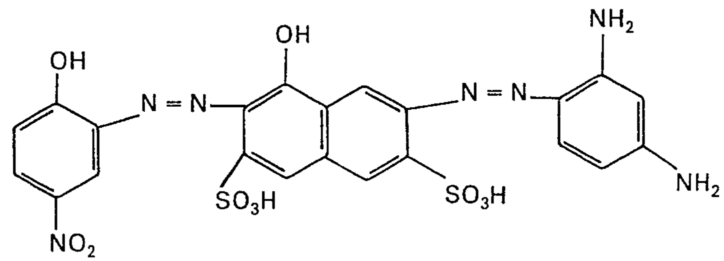 | Schwarz |
| 45. | 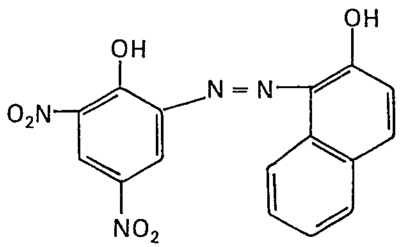 | 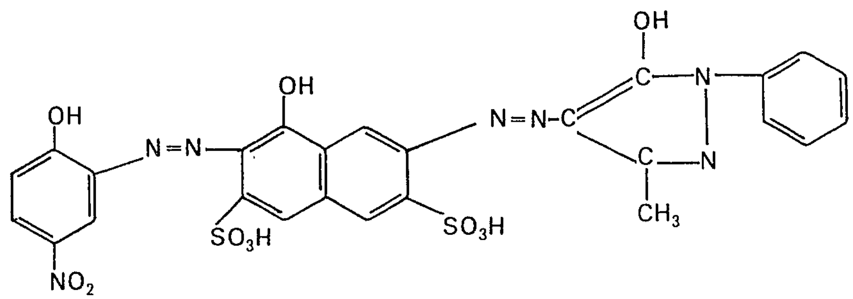 | Schwarz |
| 46. | 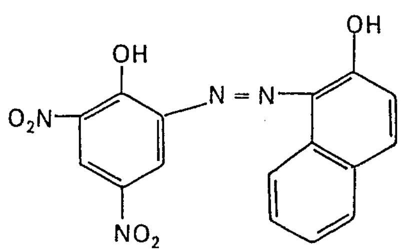 | 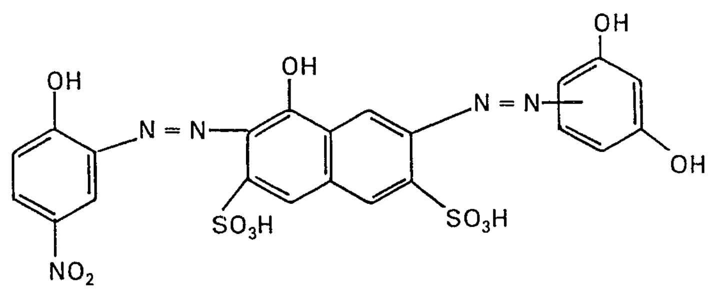 | Schwarz |

| No. | I | II | III |
|---|---|---|---|
| 47. | 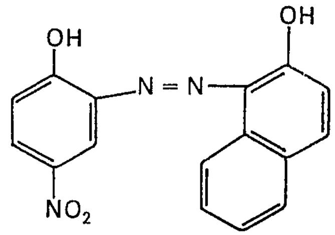 | 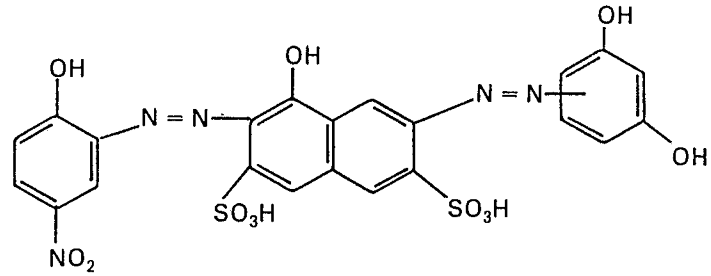 | Schwarz |
| 48. | 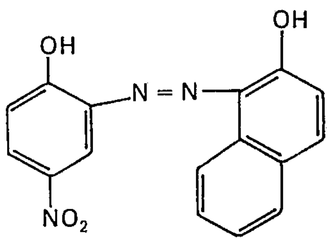 | 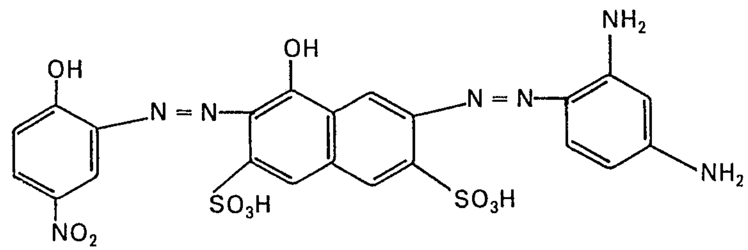 | Schwarz |
| 49. | 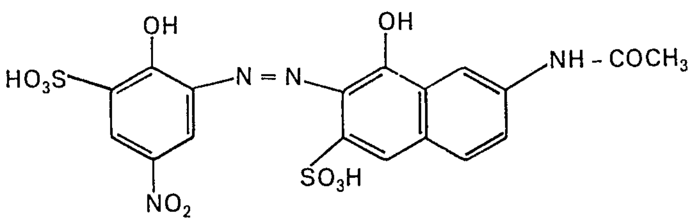 | 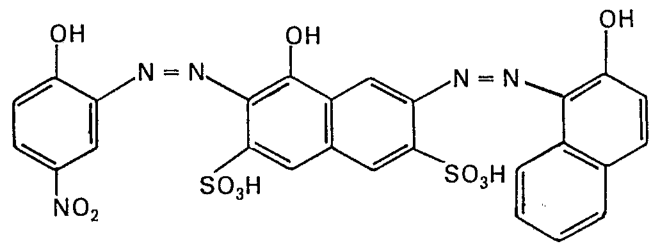 | Schwarz |

| No. | I | II | III |
| --- | --- | --- | --- |
| 50. | 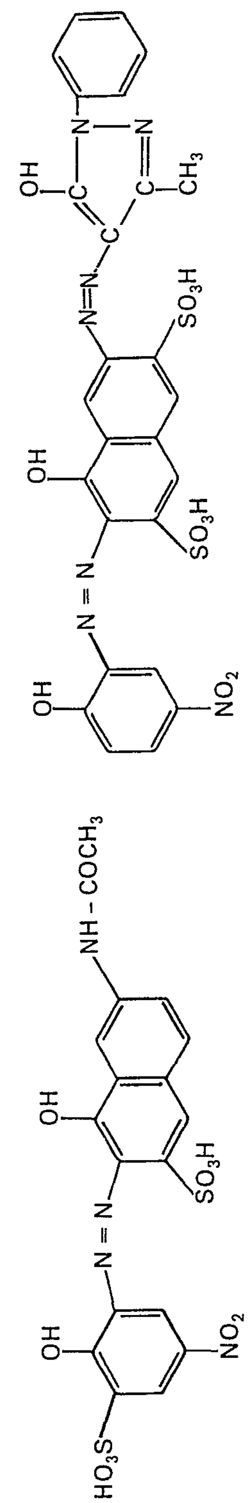 | | Schwarz |

Färbevorschrift für Leder

100 Teile Bekleidungsveloursleder (Trockengewicht) werden bei 50° in einer Lösung von 1000 Volumenteilen Wasser und 2 Teilen Ammoniak 24%ig während 2 Stunden aufgewalkt und anschliessend bei 60° in einer Lösung von 1000 Volumenteilen Wasser, 2 Teilen Ammoniak 24%ig und 4 Teilen Farbstoff aus Beispiel 1 während 1 Stunde gefärbt. Hierauf gibt man eine Lösung von 40 Volumenteilen Wasser und 4 Teilen Ameisensäure 85%ig zu und färbt noch weitere 30 Minuten. Dann werden die Leder gut gespült und gegebenenfalls noch mit 2 Teilen eines Dicyandiamidformaldehyd - Kondensationsproduktes während 30 Minuten bei 50° behandelt.

In ähnlicher Weise lassen sich andere Veloursleder sowie Handschuhleder färben.

Die so erhaltenen schwarzen Färbungen zeichnen sich durch gute Echtheiten und gute Deckvermögen aus.

**Patentansprüche**

1. 1:2-Chromkomplexe, die in Form der freien Säure der Formel

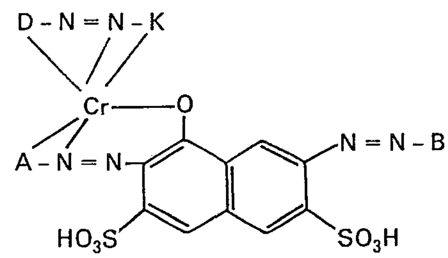

(I)

entsprechen, worin A der Rest eines 1-Hydroxy-2-aminobenzols ist, welcher ein- oder zweimal durch Chlor, Nitro oder Sulfo substituiert ist, B ein 1- oder 2-Naphthol, m-Phenylendiamin, Resorcin, p-Alkyl($C_1$-$C_6$)-Phenol, 1-Phenyl-3-methyl-5-pyrazolon oder Acetessigsäureanilid, wobei die Phenylgruppe in den beiden letztgenannten Verbindungen durch $C_1$-$C_4$-Alkyl, $C_1$-$C_4$-Alkoxy, Chlor oder Sulfo substituiert sein kann, K gegebenenfalls durch Sulfo und/oder Amino substituiertes 1-Naphthol oder 2-Naphthol, in p-Stellung durch $C_1$-$C_6$-Alkyl substituiertes Phenol, gegebenenfalls durch Sulfo substituiertes 2-Naphthylamin, 1-Phenyl-3-methyl-5-pyrazolon oder Acetessigsäureanilid, wobei die Phenylgruppe in den beiden letztgenannten Verbindungen durch $C_1$-$C_4$-Alkyl, $C_1$-$C_4$-Alkoxy, Chlor oder Sulfo substituiert sein kann und D der Rest eines 1-Hydroxy-2-aminobenzols oder 1-Amino-2-Hydroxynaphthalins, welches noch durch Nitro und/oder Sulfo substituiert ist, bedeutet.

2. Verfahren zur Herstellung von Metallkomplexfarbstoffen der Formel (1) gemäss Anspruch 1, dadurch gekennzeichnet, dass man einen Farbstoff der Formel (2)

D - N = N - K (2)

oder einen Farbstoff der Formel (4)

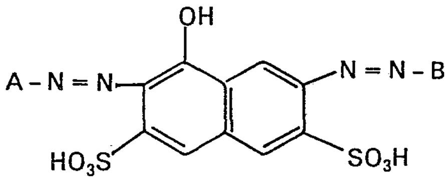

(4)

mit einem chromabgebenden Mittel zum 1:1-Komplex umsetzt und diesen anschliessend durch Reaktion mit dem Farbstoff der Formel (4) bzw. (2) in den 1:2-Komplex umwandelt.

3. Verfahren zur Herstellung von 1:2-Chromkomplexen gemäss Anspruch 2, dadurch gekennzeichnet, dass man zunächst einen Farbstoff der Formel (2)

D - N = N - K (2)

mit einem Chromierungsmittel zum 1:1-Metallkomplex umsetzt und diesen dann durch Reaktion mit einem Farbstoff der Formel (4)

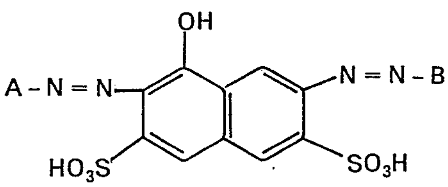

(4)

in einen 1:2-Komplex umwandelt.

4. Verfahren zum Färben oder Bedrucken von natürlichen oder synthetischen Polyamidmaterialien unter Verwendung der gemäss Anspruch 1 definierten bzw. gemäss den Ansprüchen 2 und 3 erhaltenen Farbstoffe.

5. Verfahren gemäss Anspruch 4, dadurch gekennzeichnet, dass Leder gefärbt wird.

**Claims**

1. 1:2-Chrome complexes which, in the form of the free acid, correspond to the formula wherein

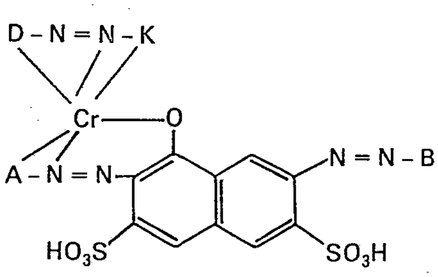

(I)

A is the radical of a 1-hydroxy-2-aminobenzene which is mono- or disubstituted by chlorine, nitro or sulfo, B is a 1- or 2-naphthol, m-phenylenediamine, resorcin, p-alkyl($C_1$–$C_6$)-phenol, 1-phenyl-3-methyl-5-pyrazolone or acetoacetic acid anilide, the phenyl group in the two last-mentioned compounds being able to be substituted by $C_1$–$C_4$-alkyl, $C_1$–$C_4$-alkoxy, chlorine or sulfo, K is 1-naphthol or 2-naphthol each unsubstituted or substituted by sulfo and/or amino, phenol substituted in the p-position by $C_1$–$C_6$-alkyl, 2-naphthylamine unsubstituted or substituted by sulfo; or is 1-phenyl-3-methyl-5-pyrazolone or acetoacetic acid anilide, the phenyl group in the two last-mentioned compounds being able to be substituted by $C_1$–$C_4$-alkyl, $C_1$–$C_4$-alkoxy, chlorine or sulfo; and D is the radical of a 1-hydroxy-2-aminobenzene or 1-amino-2-hydroxynaphthalene, each of which is also substituted by nitro and/or sulfo.

2. A process for producing metal complex dyes of the formula (1) according to claim 1, characterised in that a dye of the formula (2)

D - N = N - K (2)

or a dye of the formula (4)

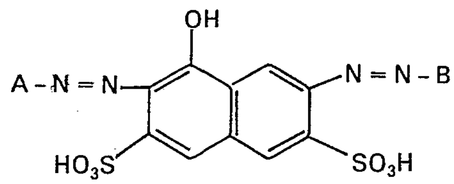

(4)

is reacted with a chromium-releasing agent to give the 1:1-complex, and this is subsequently converted, by reaction with the dye of the formula (4) or (2), into the 1:2-complex.

3. A process for producing 1:2-chrome complexes according to claim 2, characterised in that firstly a dye of the formula (2)

D - N = N - K (2)

is reacted with a chromium-releasing agent to give the 1:1-metal complex, and this is then converted by reaction with a dye of the formula (4)

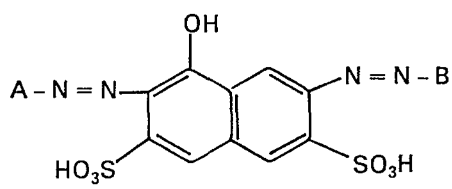

(4)

into a 1:2-complex.

4. A process for dyeing and printing natural or synthetic polyamide materials by use of the dyes defined according to claim 1 or obtained according to claims 2 and 3.

5. A process according to claim 4, characterised in that leather is dyed.

**Revendications**

1. Complexes chromifères 1:2 qui, sous la forme d'acide libre correspondent à la formule

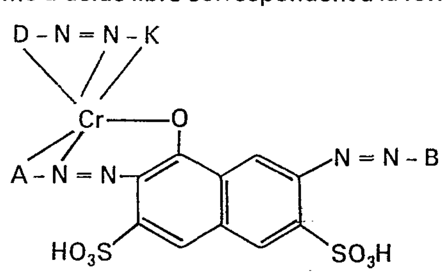

(I)

dans laquelle A est le reste d'un 1-hydroxy-2-aminobenzène, qui est substitué une ou deux fois par les radicaux chloro, nitro ou sulfo; B est un reste de 1- ou 2-naphtol, méta-phénylènediamine, résorcine, p-alkyl($C_1$–$C_6$)-phénol, 1-phényl-3-méthyl-5-pyrazolone ou acéto-acétylanilide, le groupe phényle dans les deux derniers composés mentionnés, pouvant être substitué par les radicaux $C_1$–$C_4$-alkyle, $C_1$–$C_4$-alcoxy, chloro ou sulfo; K est un reste de 1-naphtol ou de 2-naphtol éventuellement substitué par les radicaux sulfo et/ou amino, un reste phénol substitué en position p par un radical $C_1$–$C_6$-alkyle, un reste de 2-naphtylamine, 1-phényl-3-méthyl-5-pyrazolone ou acéto-acétylanilide, éventuellement substitués par le radical sulfo, le groupe phényle dans les deux derniers composés mentionnés pouvant être substitué par les radicaux $C_1$–$C_4$-alkyle, $C_1$–$C_4$-alcoxy, chloro ou sulfo, et D est le reste d'un 1-hydroxy-2-aminobenzène ou d'un 1-amino-2-hydroxynaphtalène, qui est substitué encore par les radicaux nitro et/ou sulfo.

2. Procédé pour la préparation de colorants à complexes métallifères de formule (1) selon la revendication 1, caractérisé par le fait qu'on fait réagir un colorant de formule (2)

$$D-N=N-K \qquad (2)$$

ou un colorant de formule (4)

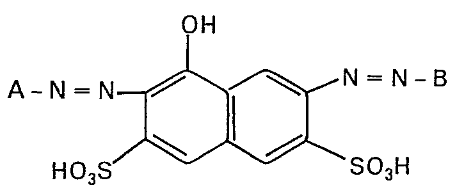

(4)

avec un agent donneur de chrome pour avoir un complexe 1:1 puis qu'on transforme ce complexe en le complexe 1:2 par réaction avec le colorant de formules (4) ou (2).

3. Procédé pour la préparation de complexes chromifères 1:2 selon la revendication 2, caractérisé par le fait qu'on fait réagir tout d'abord un colorant de formule (2)

$$D-N=N-K \qquad (2)$$

avec un agent donneur de chrome pour avoir un complexe métallique 1:1 puis qu'on transforme ce complexe en un complexe 1:2 par réaction avec un colorant de formule (4)

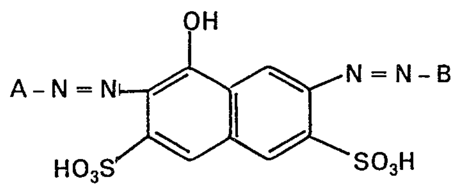

(4)

4. Procédé pour la teinture ou l'impression de matières en polyamide naturelles ou synthétiques en utilisant les colorants définis selon la revendication 1 ou obtenus selon les revendications 2 et 3.

5. Procédé selon la revendication 4, caractérisé par le fait qu'on teint le cuir.